# EUROPÄISCHE PATENTSCHRIFT

(11) **EP 1 554 898 B1**
(45) Veröffentlichungstag und Bekanntmachung des Hinweises auf die Patenterteilung: **30.08.2017**
(21) Anmeldenummer: 03769433.8
(22) Anmeldetag: 21.10.2003
(51) Int. Cl.: H04W 4/18, H04L 12/58, H04L 29/06

(54) **KONVERTER FÜR MOBILFUNKNETZE ZUR ERZEUGUNG VON EINHEITSFORMATEN**
CONVERTER FOR MOBILE RADIO NETWORKS FOR THE GENERATION OF STANDARD FORMATS
CONVERTISSEURS POUR DES RÉSEAUX DE TÉLÉPHONIE MOBILE, DESTINÉS À FOURNIR DES FORMATS UNITAIRES

(30) Priorität: 23.10.2002 DE 10249527
(43) Veröffentlichungstag der Anmeldung: 20.07.2005
(73) Patentinhaber: Vodafone Holding GmbH, 40213 Düsseldorf (DE)
(72) Erfinder: GAIDA, Klemens, 46519 Alpen (DE); IANNACONE, Marco, 40213 Düsseldorf (DE)
(74) Vertreter: Weisbrodt, Bernd
(86) Internationale Anmeldenummer: PCT/EP2003/011664
(87) Internationale Veröffentlichungsnummer: WO 2004/039107

(56) Entgegenhaltungen:
- EP-A- 1 265 408
- WO-A-97/20442
- WO-A-02/063838
- US-A- 5 870 454
- "Universal Mobile Telecommunications System (UMTS); Multimedia Messaging Service (MMS), Functional description; Stage 2 (3GPP TS 23.140 version 4.2.0 Release 4)" ETSI TS 123 140 V4.2.0, XX, XX, März 2001 (2001-03), XP002180514
- GUMBEL R T ET AL: 'ASN.1 FURNISHES THE KEY TO COMPOUND DOCUMENT EXCHANGE' COMPUTER TECHNOLOGY REVIEW Bd. 12, Nr. 10, 01 August 1992, CA, USA, Seiten 29 - 33, XP000301199 ISSN: 0278-9647

## Beschreibung

### Technisches Gebiet

Die Erfindung betrifft eine Mobilfunknetzwerkeinrichtung, insbesondere nach dem GSM- und UMTS-Standard, enthaltend:
a) eine zentrale Rechner- und Vermittlungseinheit, wobei die Rechner- und Vermittlungseinheit insbesondere Sprach-, Text-, Bild- oder Binärdaten zwischen zwei Kommunikationspartnern über das Mobilfunknetz der Mobilfunknetzwerkeinrichtung vermitteln kann, und
b) Sende- und Empfangseinrichtungen.

Ferner betrifft die Erfindung ein Konvertierungsverfahren in einer Mobilfunknetzwerkeinrichtung mit einer zentralen Rechner- und Vermittlungseinheit, insbesondere nach dem GSM- und UMTS-Standard, wobei die Rechner- und Vermittlungseinheit insbesondere Sprach-, Text-, Bild oder Binärdaten zwischen zwei Kommunikationspartnern über das Mobilfunknetz vermittelt.

### Stand der Technik

Mobilfunknetzwerkeinrichtungen, insbesondere nach dem GSM- und UMTS-Standard, sind hinlänglich bekannt. Sie werden in zahlreicher Literatur, beispielsweise in "GSM Global System for Mobile Communication", 2. Auflage, Eberspächer / Vögel, Verlag: Teubner Stuttgart-Leipzig, beschrieben. Die Mobilfunknetzwerkeinrichtungen bestehen im wesentlichen aus Sende- und Empfangsmasten, die beispielsweise auf Häuser oder Kirchen gestellt werden, um so flächendeckend ganze Gebiete mit Mobilfunknetzanbindung zu versorgen.

In diesen Mobilfunknetzen kann mit Mobilfunkendgeräten, beispielsweise Handys, kommuniziert werden. Die Verwaltung sowie die Vermittlung zwischen Kommunikationspartnern beziehungsweise zwischen den Mobilfunkendgeräten werden üblicherweise in einer zentralen Rechner- und Vermittlungseinheit durchgeführt. Alle Sprach-, Text-, Bild- oder sonstigen binären Daten, welche zwischen den Kommunikationspartnern ausgetauscht werden, laufen über diese zentrale Rechner- und Vermittlungseinheit.

Mittlerweile werden häufig Texte, Bilder und andere Daten zwischen den Kommunikationspartnern ausgetauscht. Dabei werden Texte beispielsweise als SMS oder als E-Mail versendet. Da die Mobilfunkendgeräte und auch die Mobilfunknetzwerkeinrichtungen immer leistungsfähiger werden, können auch die Texte entsprechend immer größer werden.

Eine Textdatei besteht neben den reinen Zeichen, welche üblicherweise im ASCII-Format vorliegen, auch aus zahlreichen Steuerzeichen, die angeben, ob ein Text beispielsweise fett gedruckt werden soll oder an welcher Stelle ein Absatz zu setzen ist, an welcher Stelle der Text zu stehen hat, usw. Diese Steuerzeichen bilden letztendlich das Format eines Textes. Ein herstellerfremdes Gerät, welches dieses Textformat nicht verarbeiten kann, wird die Steuerzeichen daher völlig falsch interpretieren.

Problem bei der Versendung von Texten ist jedoch, dass praktisch jeder Hersteller von Mobilfunkendgeräten, aber auch von Festnetzgeräten, jeweils sein eigenes Textformat bevorzugt. Hierdurch wird es oft unmöglich, die Texte, die mit dem Mobilfunkendgerät des einen Herstellers erzeugt und versandt wurden, mit dem Mobilfunkendgerät des anderen Herstellers zu verarbeiten. Dies liegt daran, dass unterschiedliche Textformate verwendet werden. Gleiches gilt natürlich auch für Bildformate oder auch beispielsweise für digitale Filmformate. Grundsätzlich gilt dies für alle Formate, die durch einen anderen Kommunikationspartner verarbeitet werden müssen.

Die einzige Möglichkeit, neben einer Absprache zwischen den Herstellern, um solche Textformate verarbeiten zu können, bestehen derzeit darin, dass die Mobilfunkendgeräte jeweils ihren eigenen Konverter aufweisen, um die Text- und Bildformate anderer Hersteller verarbeiten zu können.

Die WO 02/063838 A2 beschreibt ein Verfahren, bei dem MMS-Nachrichten an Teilnehmereinrichtungen versandt werden können, die nicht in ein MMS-fähiges System eingebunden sind. Dazu erfolgt eine Konvertierung der MMS-Nachricht in das Nachrichtenübertragungsformat des empfängerseitigen Kommunikationssystems, so dass die anderen Geräte die MMS-Nachrichten empfangen und verarbeiten können.

Die US 5,870,454 A beschreibt einen Telekommunikations-Dienst, der eine Sprachnachricht in eine Textnachricht konvertiert. Die Textnachricht wird so aufbereitet, dass sie von verschiedenen Geräten, wie beispielsweise Fax, E-Mail, Mobilfunkendgerät empfangen werden kann.

Die Veröffentlichung "ASN.1 Furnishes The Key To Compound Document Exchange" von Gumbel et al aus dem Jahre 1992 offenbart den sogenannten ASN.1-Standard, Abstract Syntax Notation One, der den ISO-Standard auf der Anwendungsebene für einen Datenaustausch darstellt. Der ASN.1-Standard dient für die abstrakte Beschreibung von Datentypen, ohne auf die rechnerinterne Darstellung der Datentypen einzugehen. Dieser Standard richtet sich an die im Rahmen des Dateiaustauschs möglicherweise auftretenden Probleme hinsichtlich der Darstellung und der Interpretation von Datentypen. Gemäß der Veröffentlichung kann der ASN.1-Standard als ein sogenannter String ausgebildet sein, mit welchem die Definierung eines Datentyps möglich ist, wobei zusätzlich mittels des ASN.1-Standards die Enkodierung der Daten durchführbar ist. Dabei ist dieser Datentyp Plattform-unabhängig für bearbeitbare Dokumente, so dass bei der Verwendung dieses Standards im Rahmen der Erstellung die entsprechend erstellten Dokumente auf weiteren Plattformen darstell- und bearbeitbar sind.

### Offenbarung der Erfindung

Aufgabe der Erfindung ist es daher, eine Mobilfunknetzwerkeinrichtung und ein Verfahren für ein Mobilfunknetz zu schaffen, bei dem alle Mobilfunkendgeräte, egal von welchem Hersteller sie kommen, möglichst alle versendeten Formate verarbeiten können.

Erfindungsgemäß wird die Aufgabe dadurch gelöst, dass bei einer Mobilfunknetzwerkeinrichtung der eingangs genannten Art
c) Konvertierungsmittel in der zentralen Rechner- und Vermittlungseinheit vorgesehen sind, welche dazu ausgebildet sind, verschiedene Textformate von zu vermittelnden Texten in ein für jedes Mobilfunkendgerät verarbeitbares Einheitstextformat zu konvertieren, indem die entsprechenden Textsteuerzeichen der Textformate konvertiert werden, und
d) die zentrale Rechner- und Vermittlungseinheit zum Weitervermitteln der Texte im Einheitstextformat an die Mobilfunkendgeräte ausgebildet ist.

Weiterhin wird die Aufgabe durch ein Konvertierungsverfahren in einer Mobilfunknetzwerkeinrichtung der eingangs genannten Art gelöst, bei dem eine zentrale Konvertierungseinheit verschiedene Textformate von zu vermittelnden Texten in ein für alle Mobilfunkendgeräte verarbeitbares Einheitstextformat umwandelt, indem die entsprechenden Textsteuerzeichen der Textformate konvertiert werden, und eine Weitervermittlung der Texte im Einheitstextformat durch die zentrale Rechner- und Vermittlungseinheit erfolgt.

Die Erfindung beruht auf dem Prinzip, die verschiedenen Textformate edvtechnisch zentral zu verwalten, in ein einheitliches Format zu konvertieren und dann anschließend an das Mobilfunkendgerät des entsprechenden Kommunikationspartners zu vermitteln. Hierfür ist es erforderlich, dass der Konvertierungseinheit praktisch alle gängigen Textformate bekannt sind, um die entsprechenden Textsteuerzeichen zu konvertieren.

Als vorteilhafte Ausgestaltung der Erfindung hat sich erwiesen, wenn Konvertierungsmittel in der zentralen Rechner- und Vermittlungseinheit vorgesehen sind, welche die zu vermittelnden Bilder in ein für jedes andere Mobilfunkendgerät verarbeitbares Einheitsformat konvertieren. Durch diese Maßnahme können auch die verschiedenen Bildformate in einem Einheitsformat weitervermittelt werden.

In einer weiteren vorteilhaften Ausgestaltung sind Konvertierungsmittel in der zentralen Rechner- und Vermittlungseinheit vorgesehen, welche die zu vermittelnden binären Datenformate jeweils in ein dem Datenformat entsprechendes, zugeordnetes, für jedes andere Mobilfunkendgerät verarbeitbares Einheitsformat konvertieren. Da es noch weitere binäre Formate als die Text- und Bildformate gibt, werden hierdurch auch beispielsweise digitale Filme in Einheitsformate konvertiert.

Da die Konvertierungseinheit jede Textdatei durcharbeitet, besteht in einer vorteilhaften Ausgestaltung noch die Möglichkeit, den Text in einer anderen Sprache zu übersetzen. Hierfür sind geeignete Konvertierungsmittel in der zentralen Rechner- und Vermittlungseinheit vorgesehen, welche die zu vermittelnden Texte der einen Sprache in jeweils eine andere ausgewählte Sprache übersetzen. Vorzugsweise kennen die zu übersetzenden Texte in die jeweilige Landessprache übersetzt werden.

Eine vorteilhafte Ausgestaltung besteht darin, dass die zu vermittelnden Bilder durch die zentrale Konvertierungseinheit in ein für jedes andere Mobilfunkendgerät verarbeitbares Einheitsformat konvertiert werden.

In einer vorteilhaften Ausbildung werden die zu vermittelnden binären Daten durch die zentrale Konvertierungseinheit in ein für jedes andere Mobilfunkendgerät verarbeitbares Einheitsformat konvertiert.

Ein bevorzugter Aspekt besteht darin, die zu vermittelnden Texte der einen Sprache durch die Konvertierungseinheit in jeweils eine andere ausgewählte Sprache zu übersetzen. Vorzugsweise eignet sich hierfür auch die jeweilige Landessprache.

### Kurze Beschreibung der Zeichnung

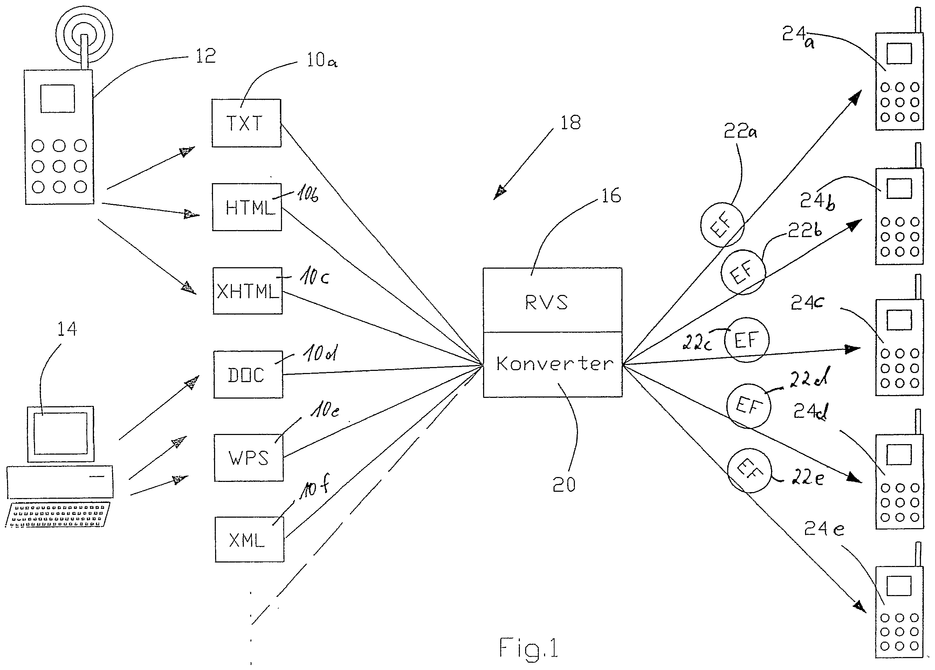

- Fig. 1: zeigt in einer Prinzipskizze die Funktionsweise einer erfindungsgemäßen Mobilfunkeinrichtung.

### Bevorzugtes Ausführungsbeispiel

Anhand von Fig. 1 soll die Funktionsweise der Erfindung erklärt werden. In Fig. 1 werden mit 10 die verschiedenen Textformate bezeichnet. Diese Textformate 10 werden entweder über Mobilfunkendgeräte 12 oder Festnetzgeräte 14 an eine zentrale Rechner- und Vermittlungsstelle 16 einer Mobilfunkeinrichtung 18 übermittelt. Symbolhaft ist für das Mobilfunkendgerät 12 ein Handy abgebildet. Für das Festnetzgerät 14 ist entsprechend symbolisch ein Computer dargestellt. Die Übermittlung der Daten in verschiedenen Datenformaten 10a-10f erfolgt auf übliche und dem Fachmann bekannte Art und Weise.

Ein Konverter 20, dem sämtliche gängigen Datenformate bekannt sind, konvertiert die verschiedenen Datenformate 10a-10f, die bei ihm eingehen, in ein Einheitsformate 22a-22e. Anschließend werden die konvertierten Einheitstextformate 22 an die 30 Mobilfunkendgeräte 24 vermittelt. Dieses Einheitstextformat 22 ist derart ausgebildet, dass es von jedem Mobilfunkendgerät 24 verarbeitet werden kann.

Diese Konvertierung funktioniert natürlich nicht nur bei Texten, sondern auch bei Bildern, Filmen oder sonstigen binären Daten, welche durch einen anderen Kommunikationspartner weiterverarbeitet werden müssen.

## Patentansprüche

1. Mobilfunknetzwerkeinrichtung (18), insbesondere nach dem GSM- und UMTS- Standard, enthaltend:
a) eine zentrale Rechner- und Vermittlungseinheit (16), wobei die Rechner- und Vermittlungseinheit (16) insbesondere Sprach-, Text-, Bild- oder Binärdaten zwischen zwei Kommunikationspartnern (12, 24a-24e) über das Mobilfunknetz der Mobilfunknetzwerkeinrichtung (18) vermitteln kann,
b) Sende- und Empfangseinrichtungen,
**dadurch gekennzeichnet, dass**
c) Konvertierungsmittel (20) in der zentralen Rechner- und Vermittlungseinheit (16) vorgesehen sind, welche dazu ausgebildet sind, verschiedene Textformate von zu vermittelnden Texten (10a-10f) in ein für jedes Mobilfunkendgerät (24a-24e) verarbeitbares Einheitstextformat (22a-22e) zu konvertieren, indem die entsprechenden Textsteuerzeichen der Textformate konvertiert werden, und
d) die zentrale Rechner- und Vermittlungseinheit (16) zum Weitervermitteln der Texte im Einheitstextformat (22a-22e) an die Mobilfunkendgeräte (24) ausgebildet ist.

2. Konvertierungsverfahren in einer Mobilfunknetzwerkeinrichtung (18) mit einer zentralen Rechner- und Vermittlungseinheit (16), insbesondere nach dem GSM- und UMTS-Standard, wobei die Rechner- und Vermittlungseinheit (16) insbesondere Sprach-, Text-, Bild- oder Binärdaten (10a-10f) zwischen zwei Kommunikationspartnern (12, 24a-24e) über das Mobilfunknetz (18) vermittelt, **dadurch gekennzeichnet, dass** eine zentrale Konvertierungseinheit (20) verschiedene Textformate von zu vermittelnden Texten (10a-10f) in ein für alle Mobilfunkendgeräte (24a-24e) verarbeitbares Einheitstextformat (22a-22e) umwandelt, indem die entsprechenden Textsteuerzeichen der Textformate konvertiert werden, und eine Weitervermittlung der Texte im Einheitstextformat (22a-22e) durch die zentrale Rechner- und Vermittlungseinheit (16) erfolgt.

## Claims

1. A mobile radio network device (18), in particular according to the GSM and UMTS standard, comprising:
a) a central computer and switching unit (16), wherein the computer and switching unit (16) can especially transmit voice, text, image or binary data between two communication partners (12, 24a-24e) via the mobile radio network of the mobile radio network device (18),
b) sending and receiving devices,
**characterized in that**
c) conversion means (20) are provided in the central computer and switching unit (16), which conversion means are designed to convert different text formats of texts (10a-10f) to be transmitted into a standard text format (22a-22e) that can be processed by each mobile terminal (24a-24e) by converting the corresponding text control characters of the text formats and
d) the central computer and switching unit (16) is designed for passing the texts in the standard format (22a-22e) on to the mobile terminals (24).

2. A conversion method in a mobile radio network device (16) comprising a central computer and switching unit (16), in particular according to the GSM and UMTS standard, wherein the computer and switching unit (16) can especially transmit voice, text, image or binary data between two communication partners (12, 24a-24e) via the mobile radio network (18), **characterized in that** a central conversion unit (20) converts different text formats of texts (10a-10f) to be transmitted into a standard text format (22a-22e) that can be processed by all mobile terminals (24a-24e) by converting the corresponding text control characters of the text formats, and the texts in the standard format (22a-22e) will be passed on by the central computer and switching unit (16).

## Revendications

1. Dispositif de réseau radio mobile (18), notamment selon le standard GSM et UMTS, comprenant:
a) une unité centrale d'ordinateur et de commutation (16), l'unité d'ordinateur et de commutation (16) pouvant transmettre notamment des données vocales, de texte, d'image ou binaires entre deux partenaires de communication (12, 24 a-24 e) via le réseau radio mobile du dispositif de réseau radio mobile (18),
b) des dispositifs d'émission et de réception,
**caractérisé en ce que**
c) des moyens de conversion (20) sont prévus dans l'unité centrale d'ordinateur et de commutation (16), lesquels moyens de conversion sont conçus pour convertir des formats de texte différents de textes à transmettre (10a-10f) en un format de texte unique (22 a-22 e) susceptible d'être traité par chaque terminal mobile (24 a-24 e) en convertissant les caractères de contrôle de texte correspondants des formats de texte, et
d) l'unité centrale d'ordinateur et de commutation (16) est conçue pour transmettre les textes dans le format de texte unique (22 a-22 e) aux terminaux mobiles (24).

2. Procédé de conversion dans un dispositif de réseau radio mobile (18) comprenant une unité centrale d'ordinateur et de commutation (16), notamment selon le standard GSM et UMTS, l'unité centrale d'ordinateur et de commutation (16) transmettant notamment des données vocales, de texte, d'image ou binaires (10a-10f) entre deux partenaires de communication (12, 24 a-24 e) via le réseau radio mobile (18), **caractérisé en ce qu'**une unité centrale de conversion (20) convertit des formats de texte différents de textes à transmettre (10a-10f) en un format de texte unique (22 a-22 e) susceptible d'être traité par tous les terminaux mobiles (24 a-24 e) en convertissant les caractères de contrôle de texte correspondants des formats de texte, et l'unité centrale d'ordinateur et de commutation (16) transmet les textes dans le format de texte unique (22 a-22 e).
